# EUROPEAN PATENT APPLICATION

(11) **EP 3 236 202 A2**
(43) Veröffentlichungstag der Anmeldung: **25.10.2017**
(21) Anmeldenummer: 15886726.7
(22) Anmeldetag: 15.12.2015
(51) Int. Cl.: G01C 9/24, G01B 13/18

(54) **UNIVERSELLER FLÜSSIGER WINKELGEBER**

(30) Priorität: 19.12.2014 EA 201500349
(71) Anmelder: National Aviation Academy, 1045 Baku (AZ)
(72) Erfinder: HAZARKHANOV, Anvar Tapdiq, Baku, AZ5000 (AZ); KARIMLI, Toghrul Isa, Baku, AZ1104 (AZ); ABDULLABAYLI, Aftandil Abil, Baku, AZ1092 (AZ)
(74) Vertreter: Jeck, Anton
(86) Internationale Anmeldenummer: PCT/AZ2015/000007
(87) Internationale Veröffentlichungsnummer: WO 2016/154687

(57) **Zusammenfassung**

Die Erfindung bezieht sich auf Messgeräte zur Messung von Neigungswinkeln der Oberflächen bei unbeweglichen und beweglichen Objekten. Sie kann als Reservegerät zur Anzeige von Querneigungswinkeln und Längsneigungswinkeln in Neigungswinkelmessern, in Verkehrsmitteln, Flugzeugen und Schiffen angewendet werden. Die Aufgabe der Erfindung ist die schnelle Neigungswinkelmessung bei ortsfesten und dynamischen Objekten innerhalb eines breiten Winkelbereichs (0° - 180°, 0° - 360°). Das wird dadurch erreicht, dass, um die Neigungswinkel zu messen, die Flüssigkeit, die Luftblase oder die Anzeigekugel im Innenraum des halbkreis- oder kreisförmigen durchsichtigen Röhrchens unmittelbar die zu messenden Winkel zur Skala anzeigen, die auf dem durchsichtigen Röhrchen angebracht ist, ohne in eine waagerechte Lage unter der Wirkung der Schwerkraft gebracht zu werden.

## Beschreibung

Die vorliegende Erfindung bezieht sich auf die Informations- und Messtechnik. Sie kann eingesetzt werden, um Neigungswinkel der Oberflächen bei unbeweglichen und beweglichen Objekten sowie Verkehrsmitteln zu prüfen und zu messen. Sie kann auch als künstlicher Horizont (Horizontkreisel), der keiner Stromversorgung bedarf, in der Flugtechnik und in Seeschiffen eingesetzt werden.

Um die Querneigungswinkel und Längsneigungswinkel eines Flugzeugs anhand eines Kreisels mit drei Freiheitsgraden zu ermitteln, muss die Läuferdrehachse gemäß der örtlichen Vertikalen ausgerichtet sein. Die eigene Drehachse des Kreisels (des Gyroskops) erreicht ihre senkrechte Lage anhand eines pendelgestützten Korrektursystems mit Hilfe von Signalen von Flüssigkeits-Pendelimpulsgebern [1]. Weicht die Kreiselhauptachse von der Horizontebene ab, so versetzt sich *die Luftblase in Flüssigkeits-Pendelimpulsgebern* in Bezug auf die Elektroden. Der Kontaktflächeninhalt zwischen einem Elektrolyten und Platinelektroden ändert sich. Folglich laufen größen- und richtungsmäßig verschiedene Ströme über die Steuerwicklungen des Korrekturmotors. Der Korrekturmotor erzeugt ein Moment zur Aufhängeachse des Außengerüstes. Der Kreisel fängt an, zur Aufhängeachse der Gyro-Einheit zu präzedieren. Die horizontale Korrektur läuft so ab, dass der Korrekturmotor die Präzession des Kreisels in jener Richtung auslöst, in der der Differenzwinkel zwischen der Hauptachse und der Ebene kleiner wird [2]. Der Stromkreis für die Querkorrektur hat einen Kontakt, der den Stromkreis unterbricht, wenn das Flugzeug abdreht (eine Kurve ausführt). Dadurch wird der Kurvenfehler reduziert. Bei den *durch Kursivschrift* hervorgehobenen Begriffen handelt es sich um die Merkmale, die dem Gegenstand der vorliegenden Erfindung eigen sind.

Die Mängel der bekannten Vorrichtung sind ihre komplizierte und teuere Bauform sowie der sehr enge Bestimmungszweck, nur die einzige Aufgabe der Korrektur zu lösen.

Aus dem Stand der Technik ist eine Libelle mit einer Blase für Bauzwecke [3] bekannt. Diese Vorrichtung besteht aus einem *Gehäuse* und zwei oder drei *durchsichtigen flüssigkeitsgefüllten Röhrchen,* die je eine *kleine Luftblase* enthalten. Bei den durch *Kursivschrift* hervorgehobenen Begriffen handelt es sich um die Merkmale, die dem Gegenstand der beanspruchten Erfindung eigen sind.

Der Mangel der bekannten Vorrichtung ist die begrenzte Anzahl der messbaren Winkel 0°, 90°, die von der Anzahl der durchsichtigen Röhrchen mit Blasen abhängen.

Aus dem Stand der Technik ist eine Wasserwaage mit einer halbkonkaven Hemisphäre (*Behälter*) bekannt, die *aus einem durchsichtigen Kunststoff gefertigt* ist [4].

Die Innenfläche der Hemisphäre ist mit konzentrischen Kreisen versehen, die Neigungswinkeln 30°, 45° und 60° entsprechen. Darüber hinaus hat die Innenfläche der Hemisphäre zwei Linien im Winkel von 90° zueinander. Der durchsichtige *halbgebogene Behälter* enthält *Flüssigkeit* und *eine Kugel aus einem unmagnetischen Stoff.* Die Hemisphäre ist an einer L-förmigen *Grundfläche* befestigt. Bei den durch *Kursivschrift* hervorgehobenen Begriffen handelt es sich um die Merkmale, die dem Gegenstand der vorliegenden Erfindung eigen sind.

Der Mangel der bekannten Vorrichtung ist die begrenzte Anzahl der messbaren Winkel 0°, 30°, 45°, 60°.

Der nächstliegende Stand der Technik gegenüber der vorliegenden Erfindung kann seinem technischen Wesen nach (Prototyp) die Winkel in Bereichen von 0° bis 90°, 0° bis 360° messen [5]. Diese Vorrichtung enthält eine *feste Grundfläche mit einer Skala* und eine bewegliche Grundfläche, an der ein *durchsichtiges Röhrchen (Ampulle, Libellengehäuse) mit Flüssigkeit und einer Luftblase* befestigt ist. Um die Winkel zu messen, dreht sich die bewegliche Grundfläche mit der Ampulle, bis die Luftblase ihre waagerechte Stellung erreicht hat. Dabei zeigt die Lage der beweglichen Grundfläche zur Skala den gemessenen Winkel an. Bei den durch *Kursivschrift* hervorgehobenen Begriffen handelt es sich um die Merkmale, die dem Gegenstand der vorliegenden Erfindung eigen sind.

Der Mangel der bekannten Vorrichtung ist, dass die bewegliche Grundfläche bei jeder Messung in die waagerechte Stellung eingestellt werden muss.

Diese Vorrichtung ist in dynamischen Objekten mit häufiger Änderung der Neigungswinkel nicht anwendbar.

Es ist Aufgabe der Erfindung, die Zeitverluste bei laufender Messung der Neigungswinkel von ortsfesten und dynamischen Objekten in einem breiten Bereich (0° - 180°, 0 - 360°) ohne Stromversorgung zu beheben.

Der technische Effekt wird wie folgt erreicht. Um die Neigungswinkel zu messen, zeigen die Luftblase oder die Anzeigekugel im Innenraum des halbkreis- oder kreisförmigen durchsichtigen Röhrchens unmittelbar die zu messenden Winkel zur Skala an, die auf dem durchsichtigen Röhrchen angebracht ist, ohne in waagerechte Lage unter der Wirkung von Schwerkraft gebracht zu werden.

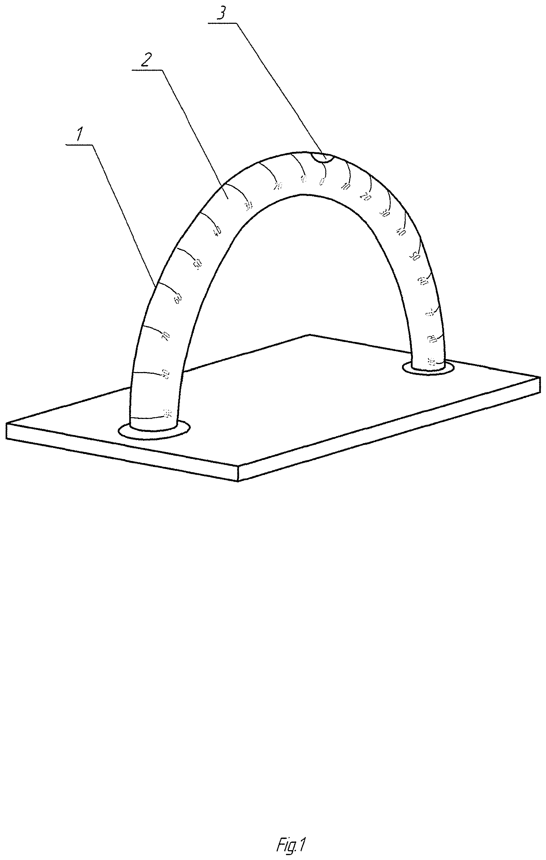

Der Mehrzweck-Flüssigkeits-Winkelanzeiger enthält ein halbkreis- oder kreisförmiges durchsichtiges Röhrchen 1 mit Flüssigkeit 2, einer Luftblase 3 oder einer Anzeigekugel 4 in dessen Innenraum. Die Grundflächen der angeführten Modelle (Fig. 1 - 8) werden unmittelbar an dem zu messenden Objekt angeordnet.

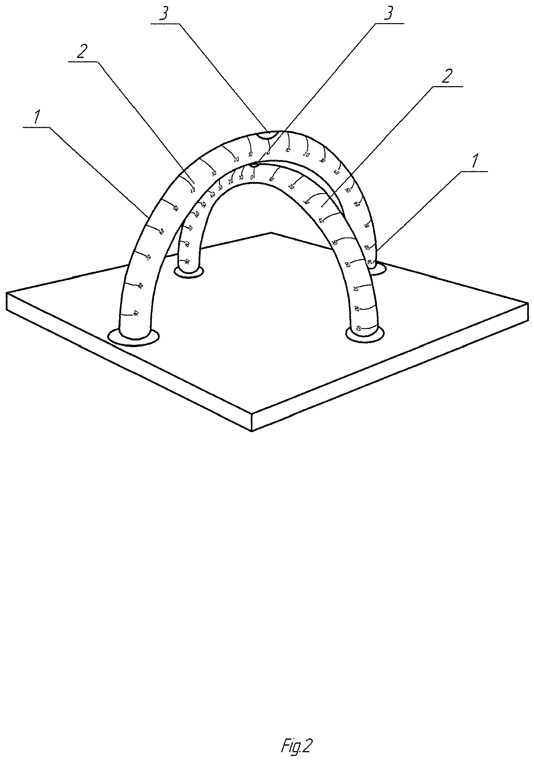

Die angeführten Modelle (Figuren 1 und 2) bestehen aus Grundflächen, an denen halbkreisförmige durchsichtige Röhrchen mit offenem Kreis befestigt sind. Diese Modelle dienen zur Messung der Winkel im Bereich von 0° bis 180°.

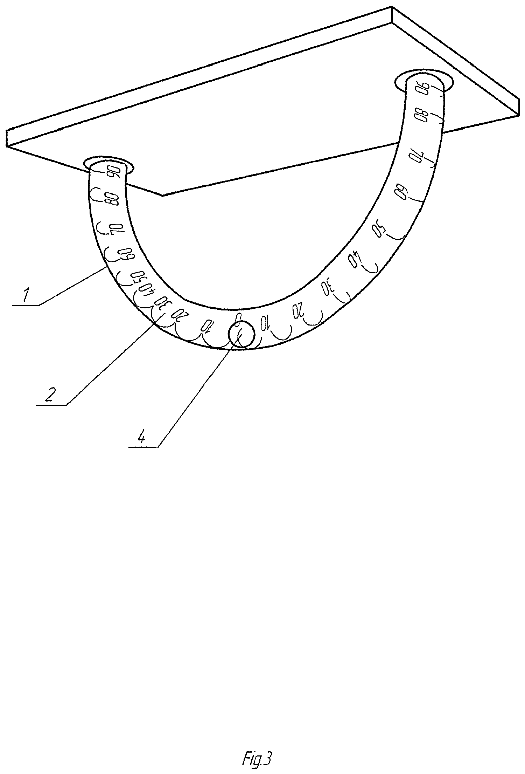

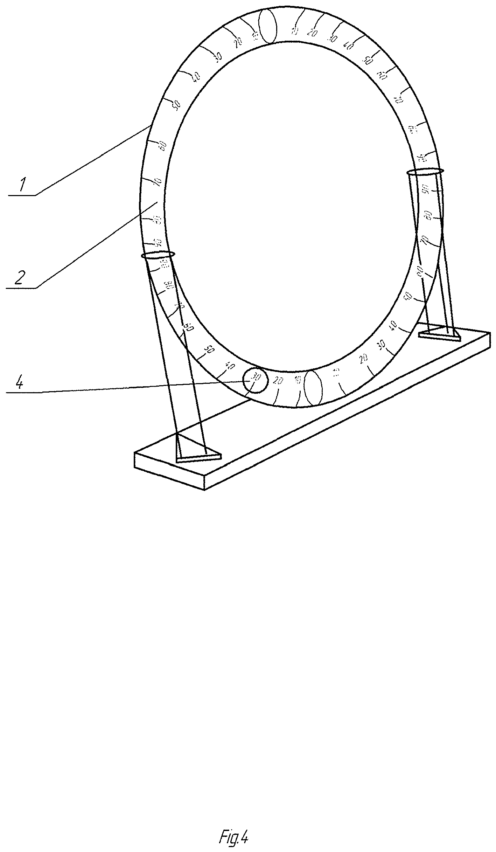

Die Vorrichtung in Fig. 3 ist vorgesehen, um die Winkel im Bereich von 0° bis 180° zu messen. Die Vorrichtung in Fig. 4 kann die Winkel im Bereich von 0° bis 360° messen, wobei als Anzeiger physikalische Pendel wirken. Dabei handelt es sich bei den physikalischen Pendeln um Kugeln, die sich in Bezug auf die Skalen bewegen. Die Skalen sind auf den durchsichtigen halbkreisförmigen Röhrchen angebracht.

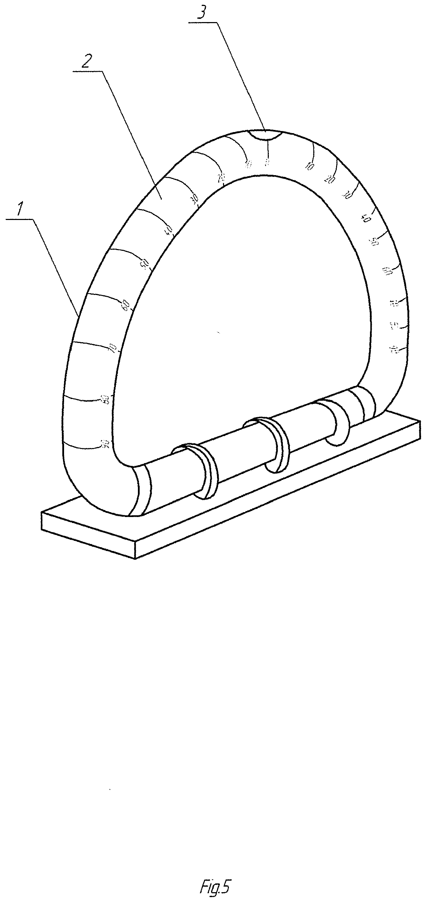

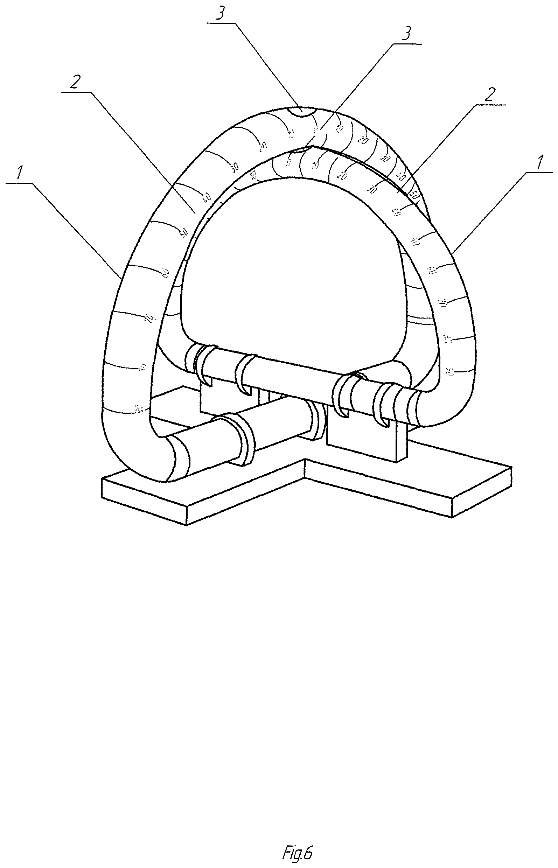

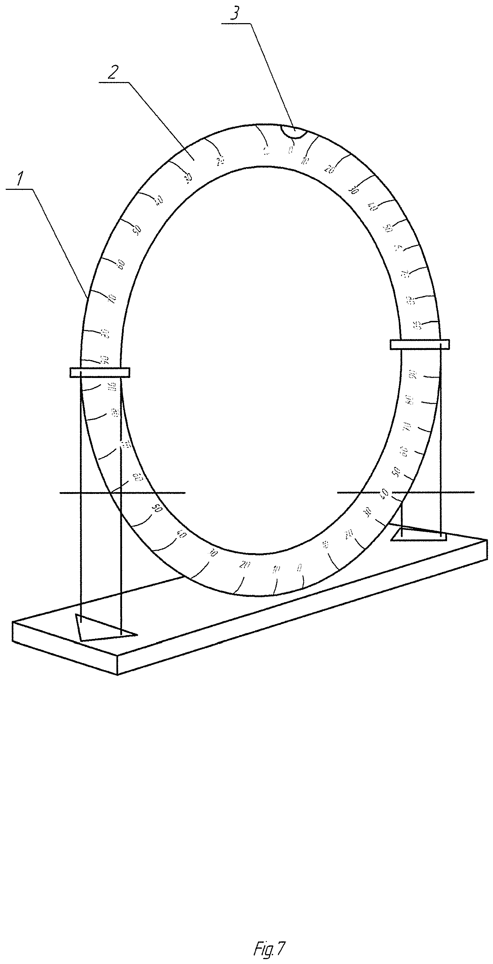

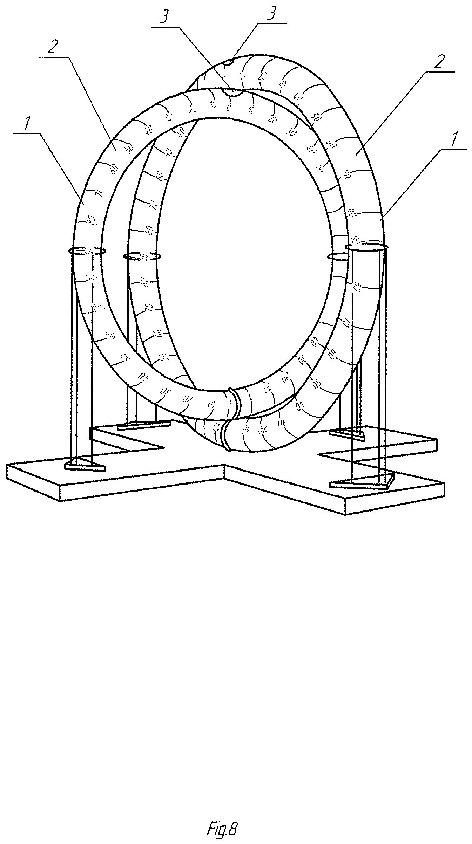

Die Vorrichtungen in den Figuren 5 und 6 dienen zur Messung der Winkel im Bereich von 0° bis 180°. Die Vorrichtungen in den Figuren 7 und 8 dienen zur Messung der Winkel im Bereich von 0° bis 360° in Bezug auf die Achsen X oder Y (Fig. 7), X und Y (Fig. 8). Die durchsichtigen Röhrchen sind halbkreisförmig oder kreisförmig mit geschlossenem Kreis ausgebildet. Durch diese Röhrchen werden die Stör-Trägheitskräfte vermindert, die auf die Flüssigkeit bei der Winkelmessung in dynamischen Objekten einwirken. Bei relativ kleinen Beschleunigungen der dynamischen Objekte ermöglicht es der gegenseitige Trägheitskräfteausgleich (die im Uhrzeigersinn und entgegen dem Uhrzeigersinn wirkenden Trägheitskräfte heben einander auf), diese Vorrichtungen (Fig. 5 - 8) als nichtelektrische Reservegeräte (mit Phosphor-Skalen) einzusetzen, um die Querneigungswinkel und die Längsneigungswinkel in der Flugtechnik und in der Hochseenavigation zu messen.

### Informationsquellen

1. S.M. Fedorov, O.I. Mikhaylov, N.N. Sukhikh. Bord-Informations- und Leitsysteme. Moskau, 1994.
2. V.G. Vorobyev, V.V. Glukhov, V.V. Kadyshev. Flugzeuginstrumente, Informations-Messsysteme und -Anlagen. Moskau, 1992.
3. http://geobiz.ru/level.
4. Patent RU 2312307. Wasserwaage. Plotnikov Aleksandr Vasilyevich. 10.12.2007. Informationsblatt Nr. 34.
5. http://tesatools.by, model Nr. 05331700.

## Patentansprüche

1. Flüssigkeits-Winkelanzeiger mit einer Grundfläche und einem daran befestigten Glasröhrchen mit einer Skala, wobei das Glasröhrchen eine Flüssigkeit und einen Anzeiger in Form einer Luftblase enthält,
**dadurch gekennzeichnet,**
**dass** das Glasröhrchen halbkreisförmig mit offenem Kreis ausgebildet ist und
**dass** seine freien Enden an der Grundfläche in Form einer Rechteckplatte befestigt sind (Fig. 1).

2. Flüssigkeits-Winkelanzeiger mit einer Grundfläche und einem daran befestigten Glasröhrchen mit einer Skala, wobei das Glasröhrchen eine Flüssigkeit und einen Anzeiger in Form einer Luftblase enthält,
**dadurch gekennzeichnet,**
**dass** er ein zweites Glasröhrchen enthält,
**dass** die Glasröhrchen dabei halbkreisförmig mit offenem Kreis ausgebildet sind und über Kreuz ineinander liegen und
**dass** ihre freien Enden an der Grundfläche in Form einer Rechteckplatte befestigt sind (Fig. 2).

3. Flüssigkeits-Winkelanzeiger mit einer Grundfläche und einem daran befestigten Glasröhrchen mit einer Skala, wobei das Glasröhrchen eine Flüssigkeit und einen Anzeiger enthält,
**dadurch gekennzeichnet,**
**dass** das Glasröhrchen halbkreisförmig mit offenem Kreis ausgebildet ist und seine freien Enden an der Grundfläche in Form einer Rechteckplatte befestigt sind und
**dass** der Anzeiger dabei in Form einer Kugel aus einem Werkstoff ausgebildet ist, dessen Dichte die der Flüssigkeit überschreitet (Fig. 3).

4. Flüssigkeits-Winkelanzeiger mit einer Grundfläche und einem daran befestigten Glasröhrchen mit einer Skala, wobei das Glasröhrchen eine Flüssigkeit und einen Anzeiger enthält,
**dadurch gekennzeichnet,**
**dass** das Glasröhrchen kreisförmig mit geschlossenem Kreis ausgebildet und an der Grundfläche in Form einer Rechteckplatte beidseitig mittels stabförmiger Stützelemente befestigt ist und
**dass** der Anzeiger dabei in Form einer Kugel aus einem Werkstoff ausgebildet ist, dessen Dichte die der Flüssigkeit überschreitet (Fig. 4).

5. Flüssigkeits-Winkelanzeiger mit einer Grundfläche und einem daran befestigten Glasröhrchen mit einer Skala, wobei das Glasröhrchen eine Flüssigkeit und einen Anzeiger in Form einer Luftblase enthält,
**dadurch gekennzeichnet,**
**dass** das Glasröhrchen halbkreisförmig mit geschlossenem Kreis ausgebildet ist und
**dass** seine geradlinige Partie an der Grundfläche in Form einer Rechteckplatte befestigt ist (Fig. 5).

6. Flüssigkeits-Winkelanzeiger mit einer Grundfläche und einem daran befestigten Glasröhrchen mit einer Skala, wobei das Glasröhrchen eine Flüssigkeit und einen Anzeiger in Form einer Luftblase enthält,
**dadurch gekennzeichnet,**
**dass** er ein zweites Glasröhrchen enthält,
**dass** die Glasröhrchen halbkreisförmig mit geschlossenem Kreis ausgebildet sind und über Kreuz ineinander auf der Grundfläche liegen,
**dass** die Grundfläche X-förmig ausgebildet ist,
**dass** die geradlinige Partie des inneren Glasröhrchens dabei zwischen zwei Vollstützen befestigt ist und
**dass** die Vollstützen an eine der Seiten der X-förmigen Grundfläche gesetzt sind (Fig. 6).

7. Flüssigkeits-Winkelanzeiger mit einer Grundfläche und einem daran befestigten Glasröhrchen mit einer Skala, wobei das Glasröhrchen eine Flüssigkeit und einen Anzeiger in Form von einer Luftblase enthält,
**dadurch gekennzeichnet,**
**dass** das Glasröhrchen kreisförmig mit geschlossenem Kreis ausgebildet und beidseitig an der Grundfläche in Form einer Rechteckplatte mittels stabförmiger Stützelemente befestigt ist (Fig. 7).

8. Flüssigkeits-Winkelanzeiger mit einer Grundfläche und einem daran befestigten Glasröhrchen mit einer Skala, wobei das Glasröhrchen eine Flüssigkeit und einen Anzeiger in Form einer Luftblase enthält,
**dadurch gekennzeichnet,**
**dass** er ein zweites Glasröhrchen enthält,
**dass** die Glasröhrchen kreisförmig mit geschlossenem Kreis ausgebildet sind und über Kreuz ineinander auf der X-förmigen Grundfläche liegen und
**dass** die Glasröhrchen dabei an der X-förmigen Grundfläche mittels stabförmiger Stützelemente befestigt sind (Fig. 8).
